# FASCICULE DE BREVET EUROPEEN

(11) **EP 0 474 558 B1**
(45) Date de publication et mention de la délivrance du brevet: **19.04.1995**
(21) Numéro de dépôt: 91402372.6
(22) Date de dépôt: 04.09.1991
(51) Int. Cl.: A47C 31/02, B29C 45/14

(54) **Dispositif d'accrochage d'une bande de tirage, en particulier pour la coiffe d'un siège, procédé d'assemblage d'un tel dispositif sur une toile et bande de tirage obtenue**
Befestigungsmittel für ein Spannband, insbesondere für ein Spannband eines Sitzüberzuges, Verfahren zur Anbringung des Befestigungsmittels am Gewebe des Spannbandes, und das so hergestellte Spannband
Fastening device for a tightening band, in particular for a tightening band of a seat cover, method of the assembly of the fastening device on the cloth of the tightening band and tightening band obtained

(30) Priorité: 06.09.1990 FR 9011190; 19.03.1991 FR 9103542; 07.05.1991 FR 9105778
(43) Date de publication de la demande: 11.03.1992
(73) Titulaire: SA DELAHOUSSE ET FILS, F-49320 Brissac Quince (FR)
(72) Inventeur: Delahousse, Régis, F-49610 Murs Erigne (FR); Delahousse, Philippe, F-49610 Murs Erigne (FR)
(74) Mandataire: Phélip, Bruno

(56) Documents cités:
- EP-A- 0 240 388
- EP-A- 0 296 750
- EP-A- 0 359 643
- US-A- 2 335 222
- US-A- 3 176 057
- US-A- 3 362 302

## Description

La présente invention concerne un dispositif d'accrochage d'une bande de tirage destinée en particulier à équiper la coiffe d'un siège ; elle concerne également un procédé d'assemblage d'un tel dispositif sur une toile ainsi que la bande de tirage obtenue.

L'assise et le dossier de sièges, notamment des sièges automobiles, sont constitués d'une armature métallique autour de laquelle est disposée une matelassure, par exemple constituée de mousse synthétique. La matelassure est recouverte d'une coiffe formant housse qui comporte, sur sa surface externe, tout un ensemble de parties en creux ou empreintes, disposées en fonction du confort et de l'esthétique désirée. Ces empreintes sont obtenues au moyen de rappels de la coiffe vers l'intérieur du siège. Ces rappels sont en règle générale réalisés par des bandes sur la face interne de la coiffe et munis de moyens d'accrochage, soit dans la matelassure, soit sur des tiges ou des tringles noyées dans la mousse ou faisant partie de la carcasse du siège.

Tel que décrit dans le document EP-A-0 359 643 qui représente le préambule des revendications indépendantes 1, 11, 15 et 16, le dispositif d'accrochage de la bande de tirage précousue sur l'envers de la coiffe, consiste en une barrette plastique qui s'étend sur toute la longueur de la bande et qui est solidarisée sur sa bordure par soudage et notamment au moyen de techniques de moulage-coextrusion. La barrette plastique se prolonge par un moyen d'accrochage monobloc qui est obtenu sur toute la longueur de ladite barrette, en liaison avec le mode de réalisation par extrusion. Ce moyen d'accrochage longitudinal est ensuite découpé pour former une succession d'agrafes. La bande de tirage peut alors être solidarisée sur l'envers d'une coiffe et venir s'accrocher, par le dessus, au moyen de ses agrafes en forme de mousqueton, sur une tringle de l'armature du siège, disposée sous ladite bande, sensiblement dans le même plan. Pour obtenir l'accrochage, il faut presser l'agrafe sur la tringle.

Compte tenu de ses caractéristiques structurelles, le dispositif ne peut être obtenu que par des techniques du type filage ou co-extrusion. Une opération complémentaire de découpe est nécessaire pour obtenir des moyens d'accrochage espacés et cette opération complique la réalisation du dispositif et la rend plus onéreuse.

On connaît d'autres systèmes d'amarrage sur une tige d'armature, au moyen d'agrafes du type "nez de porc" solidarisées à la bande de tissu au moyen de couture ou d'une bordure soudée. Les agrafes s'étendent perpendiculairement au plan de la bande et permettent l'accrochage sur des tiges d'armatures parallèles à cette bande. Ce type de système est relativement complexe à mettre en oeuvre ; il nécessite de nombreuses opérations, à la fabrication ainsi qu'au montage sur le siège.

Le document EP-A-0 240 388 décrit un autre type de système constitué d'une barrette longitudinale surmoulée sur la bordure de la bande et à partir de laquelle s'étendent une pluralité de moyens d'accrochage en forme d'ancres marines. Ces systèmes d'accrochage sont obtenus d'un seul tenant avec la barrette, au moyen d'une technique de surmoulage par injection. L'accrochage s'effectue sur une toile polyamide à grosses mailles et non plus sur une tringle d'armature disposée parallèlement à la bande de rappel. Pour obtenir l'accrochage, il faut appuyer sur chaque ancre ; des risques de décrochage existent sur ce système.

L'objet de la présente invention concerne un dispositif d'accrochage d'une bande de rappel destinée à être solidarisée sur des carcasses classiques de sièges, c'est-à-dire sur des carcasses équipées de tringles ou de tiges d'armature disposées sensiblement parallèlement au plan de ladite bande. Le but de l'invention est de simplifier la fabrication de ces bandes de tirage ou de rappel. Un autre but de l'invention est de rendre plus facile l'opération d'accrochage, de la rendre également plus rapide et plus sûre, et de permettre un démontage de la bande de tirage.

L'invention procure également une plus grande sécurité et une garantie contre les décrochages intempestifs, accidentels.

Selon l'invention, le dispositif est constitué, de façon monobloc, d'une barrette surmoulée sur la bordure de la bande, associée à un moyen de crochetage du type mousqueton. Ce dernier est disposé de façon à agripper la tige et à se verrouiller par traction, et il est constitué d'au moins un crochet comportant :
- une embase destinée à être en contact avec la génératrice dé la tige qui est à l'opposé de la bande de tirage,
- au moins deux bordures en forme d'épaulements, destinées au maintien latéral de la tige ; ces bordures sont décalées entre elles, longitudinalement sur la longueur de la tige ; l'une desdites bordures sert de liaison entre l'embase et la barrette.

Le décalage longitudinal des bordures latérales permet l'utilisation de techniques de surmoulage par injection, sur la bordure de la bande pour obtenir des moyens d'accrochage qui s'étendent sensiblement dans un plan perpendiculaire au plan de ladite bande et au plan longitudinal de la barrette surmoulée.

Selon un premier mode de réalisation, le dispositif comporte deux bordures de liaison disposées d'un même côté de la tige et une bordure libre, de l'autre côté, disposée entre lesdites bordures de liaison.

Selon un second mode de réalisation, le dispositif comporte une bordure de liaison d'un côté de la tige et deux bordures libres, de l'autre côté, disposées de part et d'autre de ladite bordure de liaison.

Dans une forme de réalisation particulière, le dispositif comporte un crochet constitué d'au moins une bordure de liaison en forme de poutre, laquelle poutre se prolonge en équerre pour former l'embase dudit crochet. Cette embase est elle-même prolongée par un retour sensiblement parallèle à ladite poutre et constituée d'au moins une bordure libre en forme de languette décalée longitudinalement par rapport à ladite poutre.

L'extrémité de la ou des languettes peut comporter une butée formant arrêtoir pour la tige d'armature ; la poutre peut avantageusement être décalée vers l'arrière, par rapport au plan de la bande de rappel, de façon à disposer la tige d'armature sur l'embase du crochet dans le plan de ladite bande.

Selon une autre forme de réalisation, la ou les bordures libres consistent en une lamelle ou languette élastique destinée au maintien de la tige dans le logement formé par l'embase et la bordure de liaison.

Selon une disposition préférentielle, le logement de la tige est alors en forme de U couché, ouvert sur la languette élastique. Ce logement est délimilé par l' embase et la bordure latérale de liaison, laquelle se décompose en un appui latéral vertical formant le fond du U, en un retour supérieur définissant le plafond du logement et en une liaison verticale rejoignant la barrette surmoulée. Le plafond peut comporter un ergot disposé à l'entrée, lequel ergot sert de moyen de retenue de la tige dans le logement pour éviter son retrait intempestif lorsqu'une pression s'exerce sur la barrette.

Selon une autre caractéristique avantageuse , l'extrémité de la ou des languettes comporte une rampe de guidage et d'introduction de la tige dans son ou ses logements ; la ou les languetttes comportent également de préférence une échancrure de blocage pour la tige d'armature qui est encastrée à force dans le logement en forme de U.

Selon une autre caractéristique, la ou les languettes prennent naissance sous l'embase qui sert d'appui à la tige ; il est ainsi possible d'obtenir une excellente élasticité de la ou des languettes pour réaliser un blocage efficace de la tige, et son démontage éventuel par action sur ladite languette.

L'invention concerne également un procédé d'assemblage d'une barrette en matériau plastique sur une toile. Ce procédé est toujours lié au souci de permettre l'utilisation de techniques de moulage-injection pour l'obtention d'un dispositif d'accrochage simple et de qualité. Bien entendu ce procédé n'est pas limité exclusivement à la réalisation et à l'application de bandes de tirage pour la confection de sièges de véhicules automobiles.

Lorsque l'on veut réaliser un surmoulage sur la bordure de la toile, par une injection de matériau plastique face à cette bordure, en prévoyant une répartition de la matière de part et d'autre de la toile, sur les deux faces et sur une longueur relativement importante, on assiste à une déformation de ladite bo du e de la toile ; elle a tendance à se plaquer sur les parois de l'empreinte de la barrette que l'on veut réaliser. La toile ne présente pas une raideur suffisante pour résister a des contraintes importantes comme celles que l'on peut rencontrer lors de l'injection du plastique dans une empreinte.

Indépendamment de l'aspect esthétique peu favorable, lorsque l'on utilise une toile de matériau plastique, l'accrochage de la barrette surmoulée sur la bordure de ladite toile n'est pas satisfaisant non plus, malgré le mélange entre les matériaux plastiques constituant la toile et la barrette, par fusion notamment, au moment de l'injection.

La toile qui est utilisée pour réaliser ces bandes de rappel est par nature aussi souple que possible pour des raisons de confort et elle est de préférence en matériau non tissé pour des raisons économiques.

L'invention propose un procédé d'assemblage par surmoulage d'une barrette sur la bordure d'une toile, qui présente l'avantage d'éviter toute déformation de la toile et qui permet de centrer parfaitement ladite toile dans l'épaisseur de la barrette. Ce procédé présente également l'avantage de réduire de façon considérable les tolérances de positionnement de la toile dans le moule. Ceci permet notamment un gain de temps important lors de ce positionnement.

Par ailleurs, compte-tenu du centrage parfait de la toile dans l'épaisseur de la barrette, on obtient un meilleur accrochage entre la toile et la barrette. Ceci permet, selon le cas, de réduire le grammage de la toile et de ce fait d'obtenir une diminution du prix de revient des articles réalisés par cet assemblage.

Selon l'invention, le procédé d'assemblage par surmoulage d'une barrette en matériau plastique sur une toile, par exemple en matériau plastique également, consiste à pincer la toile dans le moule, sur tout le pourtour de l'empreinte de la barrette aménagée dans ledit moule, et à injecter le matériau plastique dans l'empreinte, de part et d'autre de la toile, simultanément.

Toujours selon l'invention, la toile est pincée sur une bordure d'au moins 1 mm, tout autour de l'empreinte ; elle est de préférence logée dans un lamage aménagé dans chacun des blocs constituant le moule.

L'injection du matériau plastique dans l'empreinte s'effectue de préférence au milieu de l'empreinte de la barrette, dans le plan médian correspondant au plan de la toile.

Mais l'invention sera encore illustrée, sans être aucunement limitée, par la description suivante d'un mode de réalisation particulier, donné à titre d'exemple et représenté sur les dessins annexés, dans lesquels :
- La figure 1 est une représentation schématique du dispositif d'accrochage selon l'invention, vue de côté ;
- La figure 2 est une vue schématique de face montrant deux exemples A et B de réalisation de ce dispositif ;
- la figure 3 représente un premier mode de réalisation du dispositif, vue en perspective et accroché sur une tige d'armature ;
- la figure 4 est une vue de face du dispositif de la figure 3 ;
- la figure 5 est une vue de côté du dispositif représenté figure 3 et 4 ;
- la figure 6 est une vue de côté schématique d'un second mode de réalisation du dispositif d'accrochage selon l'invention, montrant l'initiation de l'encastrement de la tige d'armature dans le système d'accrochage ;
- la figure 7 est une vue de côté schématique du dispositif de la figure 6, avec la tige d'armature encastrée dans le système de crochetage ;
- la figure 8 est une vue de face du dispositif d'accrochage représenté figure 7 ;
- la figure 9 illustre, en vue de dessus, une barrette assemblée sur la toile par le procédé selon l'invention ;
- la figure 10 illustre, en coupe selon 10-10, la barrette surmoulée sur la toile, avec, en traits mixtes fins, la schématisation du moule d' injection ;
- la figure 11 illustre une bande de tirage comprenant une barrette munie d' un crochet.

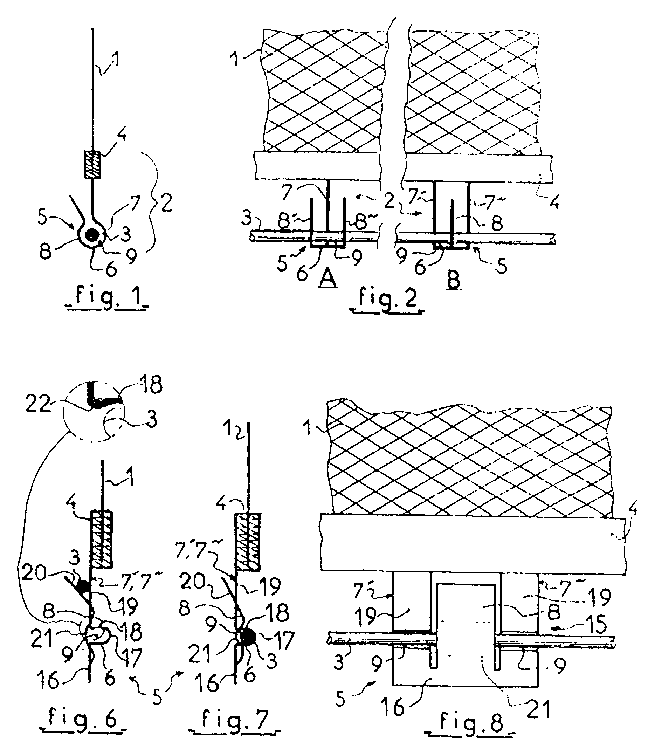

Les figures 1 à 8 montrent, partiellement, la bande de tirage 1, réalisée soit en matériau plastique soit en toile tissée ou non tissée qui est destinée à être précousue sur l'envers de la coiffe d'un siège à recouvrir. Cette bande 1 est munie d'un dispositif 2 pour son accrochage sur une tige ou tringle métallique 3 noyée dans la mousse du siège et/ou faisant partie de son armature. La bande de tirage 1, avec son dispositif d'accrochage 2, permet la fixation et la mise en tension en certains points, de la coiffe sur le siège.

Le dispositif d'accrochage 2 est obtenu de façon monobloc par moulage-injection de matériau plastique du type polyamide sur la bordure de la bande 1.

Tel qu'on l'a représenté schématiquement sur la figure 1, le dispositif d' accrochage 2 est constitué d'une barrette longitudinale 4, qui s'étend par exemple sur toute la longueur de la bande 1, et à partir de laquelle s'étendent vers le bas, un ou plusieurs crochets indépendants 5 en forme de mousqueton. Le nombre et l'espacement des crochets 5, obtenus directement par l'opération de moulage, sont fonction des caractéristiques de tirage et de rappel désirées sur la coiffe du siège. La tige d'armature 3 est disposée sensiblement parallèlement à la barrette 4 longitudinale et elle se situe pratiquement dans le plan de la bande de tirage 1 ; l'orientation du ou des crochets 5 est perpendiculaire à la tige 3.

Ces crochets 5 sont positionnés en passant sous la tige 3 et leur verrouillage sur cette dernière s'effectue par traction.

Chaque crochet 5 comporte une embase 6 qui est destinée à entrer en contact avec la génératrice inférieure de la tige 3 et qui sert d'organe de traction et de tirage sur la coiffe. Cette embase 6 est bordée par au moins deux bordures 7 et 8, en forme d'épaulements, destinées au maintien latéral de la tige 3. Pour permettre le moulage, les bordures 7 et 8 sont décalées entre elles longitudinalement, et l'une d'entre elles, la bordure 7 en l'occurence, sert de liaison entre l'embase 6 et la barrette 4. La bordure 8 consiste en une languette élastique destinée au maintien de la tige 3 dans le logement 9 formé par l'embase 6 et la bordure de liaison 7.

La figure 2A montre schématiquement, vue de face, un mode de réalisation possible du dispositif d'accrochage monobloc 2. Dans ce mode de réalisation détaillé plus loin figures 3 à 5, la barrette 4 se prolonge vers le bas par une autre bordure verticale 7 en forme de poutre, dont l'extrémité basse se prolonge en équerre vers l'avant, pour former l'embase 6. Cette embase 6 est elle-même prolongée vers le haut, de l autre coté de la tige 3 par rapport à la bordure 7, par deux languettes 8' et 8'', décalées de part et d'autre de ladite bordure 7.

La figure 2B montre schématiquement, également de face, un second mode de réalisation possible du système de crochetage. Dans ce second mode de réalisation, la barrette longitudinale 4 se prolonge vers le bas par deux bordures verticales 7' et 7'' qui sont disposées du même côte de la tige 3. Les deux bordures 7' et 7'' sont prolongées vers l'avant par un retour en équerre définissant l'embase 6, elle-même prolongée vers le haut par une languette centrale 8.

Les bordures latérales, respectivement 7, 8', 8'' et 7', 7'' et 8, selon le mode de réalisation, sont décalées longitudinalement les unes par rapport aux autres, sur la longueur de la tige, pour permettre le moulage par injection du système d'accrochage sur les bandes 1. On réalise un surmoulage pas à pas, en continu, pour obtenir une bande de tirage de grande longueur, destinée à être ensuite scindée par découpage en fonction des dimensions désirées.

Les bandes 1 qui équipent la coiffe d'un siège ont en général des longueurs de l'ordre de 20 à 40 cm ; la barrette 4 s'étend sur toute la longueur de la bande 1 et elle comporte une pluralité de crochets 5 distincts (deux à quatre en général).

Les bordures libres, en forme de lamelles ou de languettes 8, 8', 8'' sont avantageusement élastiques et conformées de façon, d'une part, à permettre l' introduction à force des tiges 3 dans leur(s) logement(s) 9 et, d'autre part, à bloquer les tiges dans ce ou ces logements.

Les figures 3 à 5 montrent un premier exemple de réalisation du dispositif d'accrochage selon l'invention. Pour simplifier la description, les éléments de structure correspondant à ceux décrits en liaison avec les figures 1 et 2 conservent les mêmes repères.

Selon ce mode de réalisation, chaque crochet 5 est constitué d'une poutre 7 qui définit le dos du crochet et qui s'étend à partir de la barrette 4 pour former un ensemble ayant une forme générale en T. Comme on peut le voir sur les figures 3 à 5, la poutre 7 est raccordée à la barrette 4 par un pan incline 10 qui la décale légèrement vers l'arrière par rapport au plan de la bande 1. L'extrémité basse de la poutre 7 se prolonge en équerre, vers l'avant, pour former le fond 6 du crochet. Ce fond 6 est lui-même prolongé vers le haut, par un retour en équerre, sensiblement parallèle à la poutre 7. Ce retour, dans l'exemple représenté, est constitué de deux languettes frontales 8' et 8'', parallèles entre elles et décalées latéralement de part et d'autre de ladite poutre 7.

L'ensemble poutre 7, fond 6 et languette 8, 8' définit un crochet disposé transversalement par rapport au plan de la bande 1. Le dos du crochet se situe en arrière du plan de ladite bande 1 et les languettes 8', 8'' en avant de ce plan. Les languettes sont décalées latéralement par rapport à la poutre 7 pour permettre le surmoulage par injection du profil plastique 2.

L'extrémité des languettes 8' et 8'' comporte une butée rentrante 11 dont le profil supérieur 12 est sensiblement parallèle au pan incliné 10 et dont le profil inférieur 13 s'étend sensiblement parallèlement au fond 6.

L'ouverture 14 du crochet est aménagé pour obtenir un crochetage aisé de la tige 3. Cette ouverture 14 se rétrécit au ni veau de la butée 11 pour permettre un verrouillage de la tige 3 dans le crochet.

On remarque, figure 5, que la tige 3 est située sensiblement dans le plan de la bande 1, grâce à un décalage vers l'arrière de la poutre 7 par rapport audit plan de la bande 1.

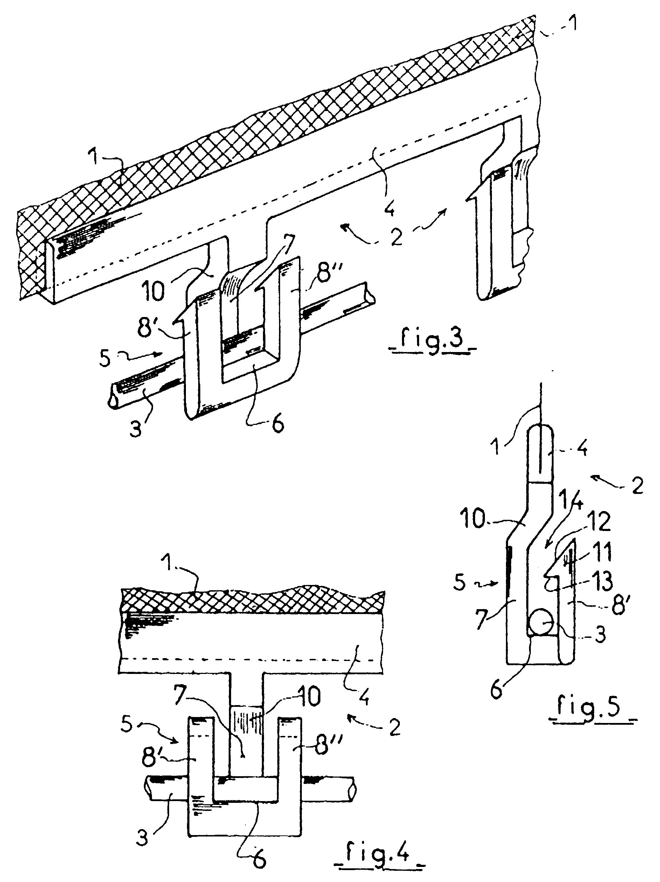

Les figures 6 à 8 montrent un second mode de réalisation du dispositif d'accrochage selon l' invention, qui se rapproche de la représentation schématique de la figure 2B. Ce dispositif est constitué d'un cadre plastique 15 (figure 8), réalisé d'un seul tenant avec la barrette 4. Ce cadre s'étend dans un plan parallèle à celui de la bande 1, à partir de la face arrière de ladite barrette 4. Ce cadre 15 est constitué de deux jambes verticales définissant les bordures 7' et 7'', reliées par une semelle 16 disposée parallèlement à la barrette 4, en-dessous du niveau de la tige 3, et à partir de laquelle s'étend, vers le haut, la languette centrale 8. Vue de face, figure 8, la languette 8 occupe la quasi intégralité de l'espace central défini par le cadre 15 et la barrette 4 ; chaque bordure 7, 7'' comporte, sur sa hauteur, un logement 9 en forme de U couché, ouvert du côté de la lamelle 8 (figures 6 et 7). Chaque logement 9 est délimité par l' embase 6 formant surface d'appui pour la tige 3 et par la bordure de liaison 7', 7'', conformée pour définir un appui latéral vertical 17 formant le fond du U 9, prolongé par un retour supérieur 18 qui définit le plafond dudit logement, lui même prolongé par une bande de liaison verticale 19 rejoignant la barrette 4.

Chaque logement longitudinal accueille une portion de la tige 3.

La languette 8 prend la naissance à partir de la semelle 16, sous l'embase 6. elle est conformée pour empêcher la tige 3 de sortir des logements 9 ; son élasticité peut notamment permettre d'appliquer une pression sur ladite tige 3 afin de plaquer cette dernière contre les appuis latéraux verticaux 17.

L'extrémité libre de la languette 8 peut avantageusement comporter une rampe 20 qui assure le guidage de la tige 3 et facilite son introduction dans le ou les logements 9 de réception. L'extrémité supérieure de la rampe 20 se situe à une distance suffisante des bordures 7', 7'' pour permettre un crochetage de la tige par un simple mouvement de traction sur la barrette 4.

Cette languette 8 peut également comporter sur sa hauteur, une échancrure 21 plus ou moins marquée, permettant de compléter le blocage de la tige 3 dans le ou les logements 9 correspondants.

On peut également prévoir comme représenté de façon agrandie dans l'encadré de la figure 6, un ergot 22 positionné à l'entrée du retour supérieur 18 formant le plafond du logement 9 ; cet ergot 22 sert de butée à la tige 3 et la maintien dans ledit logement en cas de pression sur la barrette 4.

Une lamelle élastique 8, disposée entre deux bordures de liaison 7', 7'' permet l'obtention du moyen d'accrochage homogène, n'appliquant aucun effet de torsion sur la tige 3. Les trois zones latérales d'appui alternées permettent un blocage et un maintien d'accrochage.

Les différents modes de réalisation selon l'invention, permettent a la bande 1 précousue à l'envers d'une housse d'habilláge de sièges automobiles, par exemple, d'être accrochée sur une tige 3 faisant partie de l'armature métallique du siège et intégrée dans un puits longitudinal formé dans la matelassure. La bande de rappel 1 est placée dans la longueur du puits, de telle sorte que les crochets 5 soient disposés perpendiculairement à la tige 3 et puissent la crocheter facilement.
La tige 3 est encastrée à force par appui sur les rampes 11 ou 20 selon le cas. L'introduction dans le logement 9 de réception peut être obtenue en faisant jouer l'élasticité de la ou des languettes frontales.

Le positionnement des crochets 5 sur la tige 3 permet de créer les lignes de tirage désirées. Le désencastrement des tiges 3, liées par exemple aux poussées sur la coiffe lors de l'assise, est évité, grâce à la conformation particulière des logements 9 et de la ou des lamelles d'appui 8, 8', 8'' qui assurent un blocage.

La tige 3 est disposée sur l'embase 6 du crochet 5, sensiblement dans le plan de la bande 1 et de la barrette 4. Cette disposition permet de positionner correctement le dispositif et de bien répartir les efforts.

Dans un mode de réalisation particulier, on peut envisager de réaliser la bande 1 en matériau plastique ; dans ce cas, l'ensemble de la bande de rappel (parties 1, 4 et 5) est avantageusement obtenu par moulage, d'un seul tenant ; les moyens de fixation de cet ensemble sur la coiffe du siège seront alors adaptés.

Les figures 9 à 11 ont trait au procédé d'assemblage particulier du dispositif d'accrochage sur la bande de rappel.

On a représenté, figure 9, une portion de toile 1. Cette toile peut être quelconque, tissée ou non tissée, réalisée par exemple en matériau plastique du genre polypropylène ou polyamide.

La barrette 4 servant à fixer la toile 1 sur l'armature du siège, non représenté, est positionnée sur la bordure de la toile 1. On remarque en fait que la barrette 4 est disposée en pleine toile, c'est-à-dire que la toile déborde tout autour. L'injection du matériau plastique s'effectue au milieu de la barrette, dans son plan médian, c'est-à-dire le plan de la toile. On observe, lors de l'injection, une fusion partielle et un ramollissement global de ta toile, ce qui favorise la soudure et procure une très grande résistance.

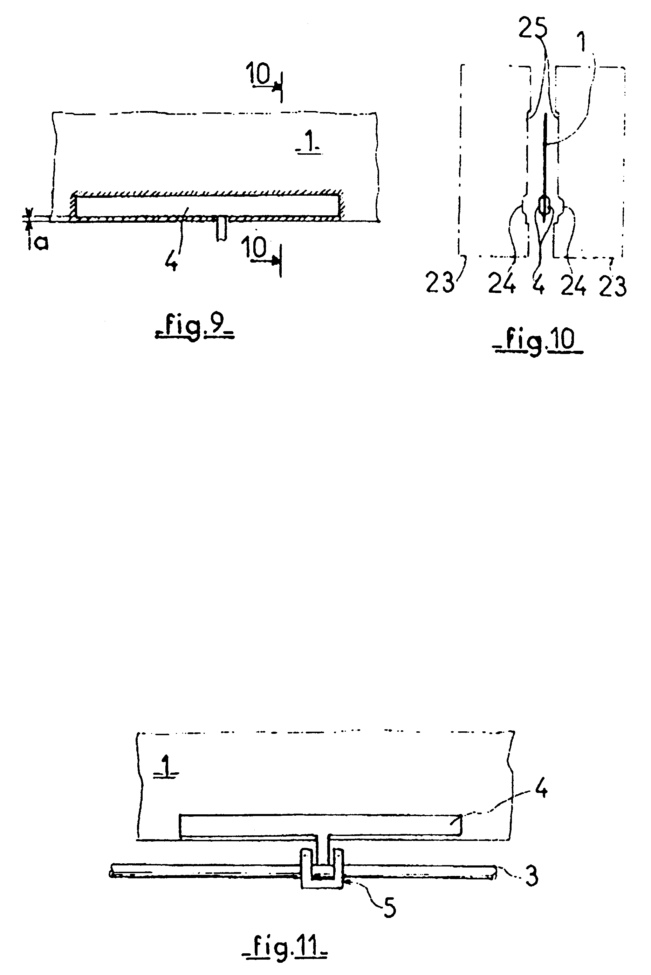

On a représenté, figure 10, en coupe, la toile 1 et la barrette 4 qui se présentent sous la forme de deux bandes plastique disposées de part et d'autre de ladite toile 1. Le moule d'injection est illustré en traits mixtes fins. Il est constitué de deux blocs 23 identiques sur la figure, qui comportent une empreinte 24 correspondant à la forme de ta barrette 4. On remarque également, représenté de façon exagérée, l'emplacement de la toile dans le moule ; cet emplacement consiste en un très large lamage 25 réalisé dans chaque bloc 23 ; la profondeur de ce lamage tient compte de l'épaisseur de la toile 1.

On remarque que la toile 1 est pincée dans le moule, sur tout le pourtour de l'empreinte de la barrette 4. Après injection du matériau plastique dans le moule, la toile est ainsi parfaitement centrée dans l'épaisseur de la barrette 4.

La toile 1 déborde par rapport à la barrette 4, sur la bordure, d'une valeur a qui est de l'ordre de 1 mm. Ce débordement peut être arasé après coup, selon l'esthétique recherchée.

On a représenté, figure 11, une portion de bande de tirage ou de rappel réalisée selon le procédé de surmoulage détaillé ci-avant. Cette bande de tirage se présente sous ta forme d'une toile 1 munie sur sa bordure, d'au moins une simple barrette 4 surmoulée. La barrette 4 comporte, de façon monobloc, au moins un crochet 5 qui s'agrippe et se verrouille sur une tige 3 soli daire du coussin ou de l'armature du siège, non représentés.

Les signes de référence insérés après les caractéristiques techniques mentionnées dans les revendications ont pour seul but de faciliter la compréhension de ces dernières et n'en limitent aucunement la portée.

## Revendications

1. Dispositif d'accrochage d'une bande de tirage (1), notamment pour la coiffe d'un siège, sur une tige (3) disposée sensiblement dans le plan de ladite bande, lequel dispositif est constitué, de façon monobloc, d'une barrette (4) surmoulée sur la bande de tirage (1) associée à un moyen de crochetage en forme de mousqueton disposé de façon à agripper la tige (3) par traction, ledit moyen de crochetage étant constitué d'au moins un crochet (5) comportant :
- une embase (6) destinée à être en contact avec le dessous de la tige (3),
- au moins deux bordures (7, 8) en forme d'épaulements destinées au maintien latéral de ladite tige, disposées d'un côté et de l'autre de ladite tige caractérisé en ce que lesdites bordures (7, 8) sont décalées entre elles longitudinalement sur la longueur de la tige, et l'une d'elles servant de liaison entre l' embase (6) et ladite barrette (4).

2. Dispositif d'accrochage selon la revendication 1, caractérisé en ce qu'il comporte deux bordures de liaison (7', 7''), disposées d'un même côté de la tige (3) et une bordure libre (8) de l'autre côté, disposée entre lesdites bordures de liaison (7', 7'').

3. Dispositif d accrochage selon la revendication 1, caractérisé en ce qu'il comporte une bordure de liaison (7) d'un côté de la tige (3), et deux bordures libres (8', 8''), de l'autre côté disposées de part et d'autre de ladite bordure de liaison (7).

4. Dispositif d'accrochage selon l'une quelconque des revendications 1 à 3, caractérisé en ce qu'il comporte un crochet (5) constitué d au moins une bordure de liaison (7) en forme de poutre, laquelle poutre (7) se prolonge en équerre pour former l'embase (6) dudit crochet, laquelle embase (6) est elle-même prolongée par un retour sensiblement parallèle à ladite poutre (7) et constitué d'au moins une bordure libre (8', 8'') en forme de languette décalée longitudinalement par rapport à ladite poutre (7).

5. Dispositif d'accrochage selon la revendication 4, caractérisé en ce que l'extrémité de la ou des languettes (8', 8''), comporte une butée (11) formant arrêtoir pour la tige d'armature (3).

6. Dispositif d' accrochage selon l'une quelconque des revendications 4 ou 5, caractérisé en ce qu'il comporte une poutre (7) décalée vers l'arrière par rapport au plan de la bande de rappel (1), de façon à disposer la tige d armature (3) sur l'embase (6) du crochet (5), dans le plan de ladite bande (1).

7. Dispositif d accrochage selon l'une quelconque des revendications 1 à 3, caractérisé en ce que la ou les bordures libres (8, 8', 8'') consistent en une lamelle ou languette élastique destinée au maintien de la tige (3) dans le logement (9) formé par l'embase (6) et la ou les bordures de liaison (7, 7', 7'').

8. Dispositif d'accrochage selon la revendication 7, caractérisé en ce que le logement (9) de la tige (3) est en forme de U couché ouvert sur la ou les languettes élastiques (8, 8', 8''), lequel logement (9) est délimité par l'embase (6) et la ou les bordures latérales (7, 7', 7'') de liaison qui se décomposent en :
- un appui vertical (17) formant le fond dudit logement (9),
- un retour supérieur (18) définissant le fond dudit logement (9),
- une liaison verticale (19) rejoignant la barrette (4).

9. Dispositif d'accrochage selon l'une quelconque des revendications 7 ou 8 caractérisé en ce que l'extrémité des languettes (8, 8', 8'') comporte une rampe (12, 20) de guidage et d'introduction de la tige (3) dans son ou ses logements (9).

10. Dispositif d'accrochage selon l'une quelconque des revendications 7 à 9, caractérisé en ce que le retour supérieur (18) comporte un ergot (22) servant de butée à la tige (3).

11. Procédé d assemblage par surmoulage d'une barrette en matériau plastique sur une toile, notamment pour la réalisation d'une bande de tirage par technique de moulageinjection, caractérisé en ce qu'il consiste à pincer la toile (1) dans te moule, sur tout le pourtour de l'empreinte de ladite barrette (4), aménagée dans ledit moule, et à injecter le matériau plastique dans l'empreinte, de part et d'autre de la toile (1), simultanément.

12. Procédé selon la revendication 11, caractérisé en ce qu'il consiste à pincer la toile (1) dans le moule, sur une bordure d'au moins 1 mm.

13. Procédé selon l'une quelconque des revendications 11 ou 12, caractérisé en ce qu'il consiste à injecter le matériau plastique au milieu de l'empreinte de la barrette (4) dans son plan médian.

14. Procédé selon l'une quelconque des revendications 11 à 13, caractérisé en ce qu'il consiste à positionner la toile (1) dans un lamage (25) aménagé dans chaque bloc (23) constituant le moule et à pincer ladite toile (1), dans ce lamage (25) avant et pendant l'injection proprement dite.

15. Bande de tirage comportant au moins un dispositif d'accrochage selon l'une quelconque des revendications 1 à 10, et/ou obtenue le procédé selon l'une quelconque des revendications 11 à 14.

16. Coiffe ou housse d'habillage comportant au moins une bande de tirage selon la revendication 15.

## Claims

1. Fastening device for a tightening band (1), in particular for a tightening band of a seat cover, on a rod (3) arranged more or less on the plane of the said band, the said single piece device comprising a bar (4) cast-moulded on the tightening band (1) associated with a hooking means in the form of a snap arranged in order to seize the rod (3) by a pulling action, whereby the said hooking means is made of at least one hook (5) comprising:
- a skid (6) designed for touching the underside of the rod (3),
- at least two rims (7, 8) in the form of shoulders designed for the lateral support of the said rod, arranged on either side of the said rod, characterised in that the said rims (7, 8) are offset with respect to each other longitudinally over the length of the rod and one of them serving as a link between the skid (6) and the said bar (4).

2. Fastening device according to claim 1, characterised in that it contains two linking rims (7', 7''), arranged on the same side of the rod (3) and a free rim (8) on the other side, arranged between the said linking rims (7', 7'').

3. Fastening device according to claim 1, characterised in that it contains a linking rim (7) on one side of the rod (3) and two free rims (8', 8'') on the other side, arranged on either side of the said linking rim (7).

4. Fastening device according to any of the claims 1 to 3, characterised in that it contains a hook (5) made of at least a linking rim (7) in the form of a beam, whereby the said beam (7) is extended as a square in order to build up the skid (6) of the said hook, whereas the said skid (6) is extended itself by an extremity more or less parallel to the said beam (7) and made of at least one free rim (8', 8'') in the form of a lug offset longitudinally with respect to the said beam (7).

5. Fastening device according to claim 4, characterised in that the end of the lug(s) (8', 8'') comprises a limit (11) serving as a stopper for the reinforcement rod (3).

6. Fastening device according to any of the claims 4 or 5, characterised in that it contains a beam (7) offset to the rear with respect to the plane of the return band (1), in order to install the reinforcement rod (3) on the skid (6) of the hook (5), on the plane of the said band (1).

7. Fastening device according to any of the claims 1 to 3, characterised in that the free rim(s) (8, 8', 8'') consist of an elastic strip or lug designed for maintaining the rod (3) in the recess (9) formed by the skid (6) and the linking rim(s) (7, 7', 7'').

8. Fastening device according to claim 7, characterised in that the recess (9) of the rod (3) is U-shaped, lying and open to the elastic lug(s) (8, 8', 8''), whereby the said recess (9) is limited by the skid (6) and the lateral linking rim(s) (7, 7', 7'') which can be broken down as follows :
- a vertical bracket (17) forming the bottom of the said recess (9),
- an upper extremity (18) describing the bottom of the side recess (9),
- a vertical link (19) joining the bar (4).

9. Fastening device according to any of the claims 7 or 8, characterised in that the end of the lugs (8, 8', 8'') comprises a ramp (12, 20) for guiding and inserting the rod (3) into its recess(es).

10. Fastening device according to any of the claims 7 to 9, characterised in that the upper extremity (18) exhibits a toe (22) serving as a stop for the rod (3).

11. Cast-moulding assembly process of a bar made of a plastic material on a cloth, in particular for the manufacture of a tightening band obtained by injecting moulding, characterised in that it consists in pinching the cloth (1) in the mould, all over the contour of the shape of the said bar (4), arranged in the said mould, and in injecting the plastic material into the shape, on either side of the cloth (1), simultaneously.

12. Process according to claim 11, characterised in that it consists in pinching the cloth (1) inside the cloth, on a rim of at least 1 mm in thickness.

13. Process according to any of the claims 11 or 12, characterised in that it consists in injecting the plastic in the middle of the shape of the bar (4) in its middle plane.

14. Process according to any of the claims 11 to 13, characterised in that it consists in positioning the cloth (1) in a countersink (25) arranged in each block (23) forming the mould and in pinching the said cloth (1), in this countersink (25) before and during the injection properly speaking.

15. Tightening band comprising at least a fastening device according to any of the claims 1 to 10, and/or obtained according to any of the claims 11 to 14.

16. Dressing cloth or cover comprising at least a tightening band according to claim 15.

## Patentansprüche

1. Befestigungsmittel für ein Spannband (1), insbesondere für ein Spannband eines Sitzüberzugs, an einer im wesentlichen in der Ebene des Bandes angeordneten Stange (3), wobei das Mittel einblockförmig aus einem an dem Spannband (1) festgegossenen Steg (4), der mit einem Einhakungsmittel in Form eines die Stange (3) durch Zug ergreifend angeordneten Karabinerhakens verbunden ist, besteht und das Einhakungsmittel aus mindestens einem Haken (5) besteht, der
- ein Fußteil (6), das dazu bestimmt ist, mit der Unterseite der Stange (3)in Kontakt zu stehen, und
- mindestens zwei schulterförmige Randteile (7, 8), die zum seitlichen Festhalten der Stange bestimmt sowie auf der einen und der anderen Seite der Stange angeordnet sind, aufweist, dadurch gekennzeichnet, daß die Randteile (7, 8) in Längsrichtung auf der Länge der Stange gegeneinander versetzt sind, und einer von ihnen zur Verbindung zwischen dem Fußteil (6) und dem Steg (4) dient.

2. Befestigungsmittel nach Anspruch 1, dadurch gekennzeichnet, daß es zwei auf der selben Seite der Stange (3) angeordnete Verbindungsrandteile(7',7'') und ein freies, auf der anderen Seite zwischen den Verbindungsrandteilen(7',7'')angeordnetes Randteil (8) aufweist.

3. Befestigungsmittel nach Anspruch 1, dadurch gekennzeichnet, daß es ein Verbindungsrandteil (7) auf einer Seite der Stange (3) und zwei freie, auf der anderen Seite beiderseits des Verbindungsrandteils (7) angeordnete Randteile (8',8'')aufweist.

4. Befestigungsmittel nach einem der Ansprüche 1 bis 3, dadurch gekennzeichnet, daß es einen Haken (5) aufweist, der aus mindestens einem Verbindungsrandteil (7) in Form eines Balkens, wobei der Balken (7) sich im Winkel verlängert, um das Fußteil (6) des Hakens zu bilden, und das Fußteil (6) selbst zu einem zum Balken (7) im wesentlichen parallelen Umkehrteil verlängert ist, und aus mindestens einem freien Randteil (8',8'') in Form einer in Längsrichtung gegenüber dem Balken (7) verschobenen Zunge besteht.

5. Befestigungsmittel nach Anspruch 4, dadurch gekennzeichnet, daß das Ende der Zunge oder Zungen (8, 8) einen Anschlag (11) aufweist, der einen Halter für die Beschlagstange (3) bildet.

6. Befestigungsmittel nach Anspruch 4 oder 5, dadurch gekennzeichnet, daß es einen gegenüber der Ebene des Rückstellbands (1) nach hinten verschobenen Balken (7) aufweist, so daß die Beschlagstange (3) auf dem Fußteil (6) des Hakens (5) in der Ebene des Bandes (1) angeordnet ist.

7. Befestigungsmittel nach einem der Ansprüche 1 bis 3, dadurch gekennzeichnet, daß das freie Randteil oder die freien Randteile (8,8',8'') aus einer zum Festhalten der Stange (3) in dem durch das Fußteil (6) und das Verbindungsrandteil oder die Verbindungsrandteile (7,7',7'') gebildeten Sitz (9) bestimmten, elastischen Lamelle oder Zunge besteht oder bestehen.

8. Befestigungsmittel nach Anspruch 7, dadurch gekennzeichnet, daß der Sitz (9) der Stange (3) in Form eines liegenden, nach der elastischen Zunge oder den elastischen Zungen (8,8',8'') hin offenen U's vorliegt, wobei der Sitz (9) durch das Fußteil (6) und das seitliche Verbindungsrandteil oder die seitlichen Verbindungsrandteile (7,7',7'')begrenzt ist, die sich in
- einen senkrechten, den tiefsten Teil des Sitzes (9) bildenden Halt (17)
- ein oberes, den tiefsten Teil des Sitzes (9) definierendes Umkehrteil (18) und
- eine senkrechte, den Steg (4) erreichende Verbindung (19) aufteilen.

9. Befestigungsmittel nach Anspruch 7 oder 8, dadurch gekennzeichnet, daß das Ende der Zungen (8,8',8'')eine Rampe (12, 20) zur Führung und Einführung der Stange (3) in ihren Sitz oder ihre Sitze (9) aufweist.

10. Befestigungsmittel nach einem der Ansprüche 7 bis 9, dadurch gekennzeichnet, daß das obere Umkehrteil (18) einen als Anschlag der Stange (3) dienenden Vorsprung (22) aufweist.

11. Verfahren zur Anbringung durch Festgießen eines Stegs aus Kunststoffmaterial an einem Gewebe , insbesondere für die Ausführung eines Spannbands durch das Spritzgußverfahren, dadurch gekennzeichnet, daß es aus dem Einklemmen des Gewebes (1) in der Form über den gesamten Umfang des Abdrucks des in der Form angeordneten Stegs (4) und dem Einspritzen des Kunststoffmaterials in den Abdruck auf beiden Seiten des Gewebes (1) gleichzeitig besteht.

12. Verfahren nach Anspruch 11, dadurch gekennzeichnet, daß es aus dem Einklemmen des Gewebes (1) in der Form auf einem Randteil von mindestens 1 mm besteht.

13. Verfahren nach Anspruch 11 oder 12, dadurch gekennzeichnet, daß es aus dem Einspritzen des Kunststoffmaterials in der Mitte des Abdrucks des Stegs (4) innerhalb seiner Mittelebene besteht.

14. Verfahren nach einem der Ansprüche 11 bis 13, dadurch gekennzeichnet, daß es aus dem Positionieren des Gewebes (1) in eine Vertiefung (25), die in jedem die Form bildenden Block angeordnet ist, und dem Einklemmen des Gewebes (1) in der Vertiefung (25) vor und während der in geeigneter Weise festgelegten Einspritzung besteht.

15. Spannband, das mindestens ein Befestigungsmittel nach einem der Ansprüche 1 bis 10 aufweist und/oder mit dem Verfahren nach einem der Ansprüche 11 bis 14 erhalten ist.

16. Haube oder Überzug zum Einhüllen, die oder der mindestens ein Spannband nach Anspruch 15 aufweist.
